# FASCICULE DE BREVET EUROPEEN

(11) **EP 1 584 604 B1**
(45) Date de publication et mention de la délivrance du brevet: **27.07.2011**
(21) Numéro de dépôt: 05290366.3
(22) Date de dépôt: 17.02.2005
(51) Int. Cl.: C01B 39/48, C01B 39/08, C01B 37/00, C01B 37/02, C01B 33/38, C10G 11/04, C10G 45/04

(54) **Solide cristallisé UVL-1 procédé d'hydroconversion/hydrocraquage de charges hydrocarbonées**
Kristallisiertes UVL-1 Material und Verfahren zum Hydrokonvertieren/Hydrocracken von Kohlenwasserstoff enthaltenden Einsatzstoffen
Crystallized UVL-1 solid material and process for the hydroconversion/hydrocracking of hydrocarbonaceous feeds

(30) Priorité: 05.03.2004 FR 0402326
(43) Date de publication de la demande: 12.10.2005
(73) Titulaire: Institut Français du Pétrole, 92852 Rueil Malmaison Cedex (FR)
(72) Inventeur: Barea, Eva, 46520 Puerto Sagunto (ES); Bourges, Patrick, 69003 Lyon (FR); Guillon, Emmanuelle, 69390 Vernaison (FR); Euzen, Patrick, 75001Paris (FR); Fornes, Vincent, 46001 Valencia (ES); Corma, Avelino, 46022 Valence (ES)

(56) Documents cités:
- WO-A-92/11934
- WO-A-97/17290
- US-A- 4 954 325
- US-A- 5 827 491
- G. PAL-BORBELY AND A. AUROUX: "Acidity of isomorphically substituted crystalline acids with layer structure. I. H-magadiite" CATALYSIS BY MICROPOROUS MATERIALS, STUDIESIN SURFACE SCIENCE AND CATALYSIS, vol. 94, 1995, pages 55-62, XP008038049
- OCCELLI M L ET AL: "Effects of isomorphous substitution of Si with Ti and Zr in mesoporous silicates with the MCM-41 structure" APPLIED CATALYSIS A: GENERAL, ELSEVIER SCIENCE, AMSTERDAM, NL, vol. 183, no. 2, 19 juillet 1999 (1999-07-19), pages 231-239, XP004271847 ISSN: 0926-860X
- FUDALA A ET AL: "Preparation, characterization and application of the magadiite based mesoporous composite material of catalytic interest" MICROPOROUS MESOPOROUS MATER; MICROPOROUS AND MESOPOROUS MATERIALS 2000 ELSEVIER SCI B.V., NETHERLANDS, vol. 35, 2000, pages 631-641, XP002303646

## Description

### Domaine technique

La présente invention se rapporte à un nouveau solide cristallisé appelé ci-après UVL-1 présentant une nouvelle structure cristalline et à son procédé de préparation.
L'invention concerne également les procédés d'hydrocraquage / hydroconversion et hydroraffinage / hydrotraitement mettant en oeuvre le solide UVL-1.

### Art Antérieur

La recherche de nouveaux solides cristallisés a conduit à la synthèse de nombreux produits de type silicates permettant de réaliser des progrès significatifs dans le domaine de la catalyse.

Ainsi le brevet US 6 469 226 B1 décrit un matériau nommé ITQ-6 obtenu par délaminage d'un composé lamellaire. Après traitement du solide lamellaire avec une solution contenant un agent gonflant, le solide est délaminé soit sous l'effet d'une agitation mécanique, soit par traitement sous ultra-son. L'oxyde cristallisé ITQ-6 présente une surface spécifique élevée, supérieure à 400m²/g. Le matériau ITQ-6 est caractérisé par son diagramme DRX.

Dans un procédé similaire, la demande de brevet WO 97/17290 rapporte l'obtention d'un matériau par délaminage d'un composé MCM-22. Ce matériau est caractérisé par son diagramme DRX.

Le brevet US 5 137 861 décrit un silicate modifié par un traitement de calcination particulier. Un matériau lamellaire est traité par un agent gonflant de manière à écarter les feuillets les uns des autres. Ce matériau ainsi obtenu est calciné afin de séparer les feuillets les uns des autres. Un délaminage partiel des feuillets est donc obtenu par calcination. Les raies principales obtenues en DRX sur un matériau préparé selon le protocole opératoire décrit par ce brevet sont obtenues à des distances inter réticulaires de 17,5 et de 3,4 Å.

### Description détaillée de l'invention

### Techniques de caractérisation

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "Thé Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour P/P₀= 0.99, pression pour laquelle il est admis que l'azote a rempli tous les pores. On définit le diamètre moyen désorption azote comme étant un diamètre tel que tous les pores inférieurs à ce diamètre constituent 50% du volume poreux (Vp) mesuré sur la branche de désorption de l'isotherme azote.

Par surface adsorption, on entend la surface mesurée sur la branche de l'isotherme d'adsorption. On se reportera par exemple à l'article de A. Lecloux "Mémoires Société Royale des Sciences de Liège, 6ème série, Tome I, fasc.4, pp.169-209 (1971)".
La diffraction X est une technique utilisée pour caractériser les solides selon l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1.5406 Å et dé 1.5444 Å). On appelle d la distance inter-réticulaire qui est déduite de la position angulaire en utilisant la relation de Bragg (2 d ₍ₕₖₗ₎ * sin (θ) - = n * λ). A partir de la position des pics de diffraction réprésentée par l'angle 2θ, on calcule par la relation de Bragg, les distances réticulaires dₕₖₗ caractéristiques de l'échantillon. L'estimation de l'erreur de mesure Δ(dₕₖₗ) sur dₕₖₗ se calcule par la relation de Bragg en fonction de l'erreur absolue Δ(2θ) affectée à la mesure de 2θ. Une erreur absolue Δ(2θ) égale à +-0.2° est communément admise.
L'intensité relative lᵣₑₗ affectée à chaque valeur de dₕₖₗ est mesurée d'après la hauteur du pic de diffraction correspondant, où FF = très fort ; m = moyen ; f = faible ; F = fort ; mf = moyen faible ; ff = très faible. L'intensité relative l/lo est donnée en rapport à une échelle d'intensité relative où il est attribué une valeur de 100 à la raie la plus intense du diagramme de diffraction des rayons X : ff<15 ; 15<=f<30 ; 30<=mf<50 ; 50<=m<65 ; 65<=F<85 ; FF>=85.

Les solides selon l'invention ont été analysés par RMN MAS du solide de ²⁷Al sur un spectromètre de la firme Brüker de type MSL 400, en sonde 4 mm. La vitesse de rotation des échantillons est de l'ordre de 11 kHz. Potentiellement, la RMN de l'aluminium permet de distinguer trois types d'aluminium dont les déplacements chimiques sont reportés ci-après :
Entre 100 et 40 ppm, aluminiums de type tétra-coordinés, notés Al _{IV},
Entre 40 et 20 ppm, aluminiums de type penta-coordinés, notés Al_{V},
Entre 20 et -100 ppm, aluminiums de type hexa-coordinés, notés Al_{VI}.
L'atome d'aluminium est un noyau quadripolaire. Dans certaines conditions d'analyse (champs de radiofréquence faible : 30 kHz, angle d'impulsion faible : π/2 et échantillon saturé en eau), la technique de RMN de rotation à l'angle magique (MAS) est une technique quantitative. La décomposition des spectres RMN MAS permet d'accéder directement à la quantité des différentes espèces. Le spectre est calé en déplacement chimique par rapport à une solution 1 M de nitrate d'aluminium. Le signal d'aluminium est à zéro ppm. Nous avons choisi d'intégrer les signaux entre 100 et 20 ppm pour les Al_{IV} et Al_{V}, ce qui correspond à l'aire 1, et entre 20 et -100 ppm pour Al_{VI}, ce qui correspond à l'aire 2. Dans l'exposé qui suit de l'invention, on entend par proportion des Al_{VI} octaédriques le rapport suivant: aire 2/ (aire 1 + aire 2).

L'acidité du solide peut être mesurée par IR. Les spectres IR sont enregistrés sur un interféromètre Nicolet de type 710 sous une résolution de 4 cm⁻¹ avec une apodisation de type Happ-Gensel. L'échantillon (10 mg) est pressé sous la forme d'une pastille auto-supportée et placé dans une cellule d'analyse in-situ (25°C à 550°C, four déporté du faisceau IR, vide secondaire de 10⁻⁶ mbar). Le diamètre de la pastille est de 13 mm.
L'échantillon est prétraité de la façon suivante afin d'éliminer l'eau physisorbée et de déshydroxyler partiellement la surface du catalyseur pour avoir une image représentative de l'acidité du catalyseur en fonctionnement :
- montée en température de 25°C à 400 °C en 3 heures
- palier de 10 heures à 400 °C
- descente de température de 400 °C à 25°C en 3 heures.

La sonde basique (pyridine) est ensuite adsorbée à pression saturante à 25°C puis thermo-désorbée selon les paliers suivants :
- 150°C 1 heure sous vide secondaire
- 250°C 1 heure sous vide secondaire
- 350°C 1 heure sous vide secondaire Un spectre est enregistré à 25°C à la fin du prétraitement et à chaque palier de désorption en mode transmission avec un temps d'accumulation de 100 s. Les spectres sont ramenés à iso-masse (donc supposés à iso-épaisseur) (10 mg exactement).

Le nombre de sites de Lewis est proportionnel à la surface du pic dont le maximum se situe vers 1450 cm⁻¹, tout épaulement étant inclus. Le nombre de sites de Bronsted est proportionnel à la surface du pic dont le maximum se situe vers 1545 cm⁻¹. Le rapport du nombre de sites de Bronsted /nombre de sites de Lewis est estimé égal au rapport des surfaces de deux pics décrits ci-dessus. On utilise généralement la surface des pics à 25°C. Ce rapport B/L est de manière générale calculé à partir du spectre enregistré à 25°C à la fin du prétraitement.

### Description de l'invention

L'invention concerne un nouveau solide cristallisé, appelé solide cristallisé UVL-1, présentant une nouvelle structure cristalline. Cette nouvelle structure cristalline est caractérisée par la présence de raies particulières dans le diagramme de diffraction X.

Le solide cristallisé UVL-1 présente un diagramme de diffraction de rayons X incluant au moins les raies inscrites dans le tableau 1 ci-dessous :

**Tableau 1**

| dₕₖₗ (A) | 2 thêta (°) | l/lo |
|---|---|---|
| 11,69 | 7,55 | mf à FF |
| 7,50 | 11,79 | ff à f |
| 5,76 | 15,36 | f à mf |
| 3,70 | 24,00 | m à F |
| 3,57 | 24,91 | F |
| 3,36 | 26,49 | FF |
| 3,14 | 28,48 | f à mf |
| 2,50 | 35,88 | ff |
| 2,41 | 37,30 | ff |

où FF = très fort ; m = moyen ; f = faible ; F = fort ; mf = moyen faible ; ff = très faible et présente une composition chimique exprimée sur une base anhydre, en termes de mole d'oxydes, définie par la formule générale suivante :

(XO₂) : (Y₂O₃)ₘ : (Z_{2/n}O)ₚ

où :
X représente au moins un élément tétravalent choisi dans le groupe formé par Si, Ge de préférence Si, et optionnellement un mélange de Ge avec Si.
Y représente au moins un élément trivalent sélectionné parmi Al, B, Cr, Ga, et de préférence Al.
Z représente au moins un cation de valence n, de préférence sélectionné parmi Ni, Zr, Co, Cu, Nb, Ti, Eu, In, de manière préférée Ni, Co, Ti et de manière très préférée Ni.
et où
n est compris entre 2 et 4,
m représente le nombre de moles de Y₂O₃ et où m est compris entre 0 et 0,2, de préférence entre 0 et 0,05,
et p représente le nombre de moles de Z_{2/n}O et où p est compris entre 0 et 0,2, de préférence entre 0 et 0,05.

Conformément à l'invention, selon un premier mode de réalisation préférée, X est le silicium et Y l'aluminium : le solide cristallisé UVL-1 selon l'invention est alors un aluminosilicate cristallisé. Le diagramme de diffraction des rayons X de cet aluminosilicate cristallisé présente toutes les raies de diffraction décrites dans le tableau 1 et les raies supplémentaires suivantes aux angles 2 thêta de 9,34°, 12,5°, 13,4°, 22,35°, 25,70°, 34,00°. Le solide cristallisé UVL-1 de type aluminosilicate présente un diagramme de diffraction de rayons X incluant au moins les raies inscrites dans le tableau 2 ci-dessous :

**Tableau 2**

| dₕₖₗ (A) | 2 thêta (°) | l/lo |
|---|---|---|
| 11,69 | 7,55 | mf |
| 9,45 | 9,34 | f |
| 7,50 | 11,79 | ff |
| 7,06 | 12,51 | f |
| 6,58 | 13,44 | f |
| 5,76 | 15,36 | f |
| 3,97 | 22,35 | f |
| 3,70 | 24,00 | m |
| 3,57 | 24,91 | F |
| 3,46 | 25,70 | mf |
| 3,36 | 26,49 | FF |
| 3,14 | 28,48 | f |
| 2,63 | 34,00 | ff |
| 2,50 | 35,88 | ff |
| 2,41 | 37,30 | ff |

où FF = très fort ; m = moyen ; f = faible ; F = fort ; mf = moyen faible ; ff = très faible. Une erreur absolue Δ(2θ) égale à +-0.2° est communément admise.

L'analyse par RMN de cet aluminosilicate cristallisé montre que l'ensemble de l'aluminium est sous forme tétraédrique c'est à dire que l'aluminium est inséré dans la charpente du matériau. Le signal de l'aluminium présente un pic à 50 ppm caractéristique de l'aluminium tétraédrique.

Conformément à l'invention, selon un deuxième mode de réalisation préférée, X est le silicium et Z le cobalt : le solide cristallisé UVL-1 selon l'invention est alors un silicate de cobalt cristallisé. Le diagramme de diffraction des rayons X de ce silicate de cobalt cristallisé présente toutes les raies de diffraction décrites dans le tableau 1. Le solide cristallisé UVL-1 de type silicate de cobalt présente un diagramme de diffraction de rayons X incluant au moins les raies inscrites dans le tableau 3 ci-dessous :

**Tableau 3**

| dₕₖₗ (A) | 2 thêta (°) | l/lo |
|---|---|---|
| 11,69 | 7,55 | mf |
| 7,50 | 11,79 | ff |
| 5,76 | 15,36 | f |
| 3,70 | 24,00 | m |
| 3,57 | 24,91 | F |
| 3,36 | 26,49 | FF |
| 3,14 | 28,48 | f |
| 2,50 | 35,88 | ff |
| 2,41 | 37,30 | ff |

où FF = très fort ; m = moyen ; f = faible ; F = fort ; mf = moyen faible ; ff = très faible. Une erreur absolue Δ(2θ) égale à +-0.2° est communément admise.

Conformément à l'invention, selon un troisième mode de réalisation préférée, X est le silicium et Z le nickel : le solide cristallisé UVL-1 selon l'invention est alors un silicate de nickel cristallisé. Le diagramme de diffraction des rayons X de ce silicate de nickel cristallisé présente toutes les raies de diffraction décrites dans le tableau 1. Le solide cristallisé UVL-1 de type silicate de nickel présente un diagramme de diffraction de rayons X incluant au moins les raies inscrites dans le tableau 4 ci-dessous :

**Tableau 4**

| dₕₖₗ (A) | 2 thêta (°) | l/lo |
|---|---|---|
| 11,69 | 7,55 | FF |
| 7,50 | 11,79 | ff |
| 5,76 | 15,36 | mf |
| 3,70 | 24,00 | m |
| 3,57 | 24,91 | F |
| 3,36 | 26,49 | FF |
| 3,14 | 28,48 | f |
| 2,50 | 35,88 | ff |
| 2,41 | 37,30 | ff |

où FF = très fort ; m = moyen ; f = faible ; F = fort ; mf = moyen faible ; ff = très faible. Une erreur absolue Δ(2θ) égale à +-0.2° est communément admise.

Conformément à l'invention, selon un quatrième mode de réalisation préférée, X est le silicium et Z le titane: le solide cristallisé UVL-1 selon l'invention est alors un silicate de titane cristallisé. Le diagramme de diffraction des rayons X de ce silicate de titane cristallisé présente toutes les raies de diffraction décrites dans le tableau 1. Le solide cristallisé UVL-1 de type silicate de titane présente un diagramme de diffraction de rayons X incluant au moins les raies inscrites dans le tableau 5 ci-dessous :

**Tableau 5**

| dₕₖₗ (A) | 2 thêta (°) | l/lo |
|---|---|---|
| 11,69 | 7,55 | m |
| 7,50 | 11,79 | ff |
| 5,76 | 15,36 | f |
| 3,70 | 24,00 | F |
| 3,57 | 24,91 | F |
| 3,36 | 26,49 | FF |
| 3,14 | 28,48 | f |
| 2,50 | 35,88 | ff |
| 2,41 | 37,30 | ff |

où FF = très fort ; m = moyen ; f = faible ; F = fort ; mf = moyen faible ; ff = très faible. Une erreur absolue Δ(2θ) égale à +-0.2° est communément admise.

La surface BET du solide cristallisé selon l'invention est supérieure à 80 m²/g, de manière préférée comprise entre 150 et 700 m²/g et de manière très préférée comprise entre 200 et 600 m²/g.

L'acidité du solide peut être mesurée par spectrométrie IR et se traduit par la valeur du rapport B/L (nombre de sites de Brönsted / nombre de sites de Lewis).

L'invention concerne également un procédé d'hydrotraitement/hydroraffinage et un procédé d'hydrocraquage/hydroconversion utilisant le solide selon l'invention.

### Procédés de préparation

Un procédé préféré de préparation du catalyseur selon la présente invention comprend les étapes suivantes :
a) On réalise la synthèse d'un solide lamellaire cristallisé. Cette synthèse peut être réalisée notamment, par exemple :
   - par mélange d'une source d'au moins un métal tétravalent X, éventuellement d'une source d'un ou plusieurs autres métaux Y, éventuellement d'une source d'un ou plusieurs autres métaux Z, d'un métal alcalin L, d'un structurant organique H et d'eau,
      * X représente au moins un élément tétravalent choisi dans le groupe formé par Si, Ge de préférence Si, et optionnellement un mélange de Ge avec Si. Le métal X peut être incorporé dans le mélange sous une forme oxyde, hydroxyde, nitrate ou autres telles que, par exemple, SiO₂, GeO₂. Dans le cas préféré où X est le silicium, la source de silice peut être du silicate, du silica gel, de la silice colloïdale et/ou de l'acide silicique.
      * Y représente au moins un élément trivalent sélectionné parmi Al, B, Cr, Ga, et de préférence Al. Dans le cas où Y est l'aluminium, la source d'aluminium peut être, par exemple, Al₂O₃, Al(NO₃₎₃.
      * Z représente au moins un cation de valence n, de préférence sélectionné parmi Ni, Zn, Co, Cu, Nb, Ti, Eu et de préférence Ni, Co, Ti. Le métal Z peut être incorporé dans le mélange sous une forme oxyde, hydroxyde, carbonate ou autre telle que, par exemple, Ni(CH₃COO)₂, Zn(CH₃COO)₂, Co(CH₃COO)₂, Cu(CH₃COO)₂, Nb₂O₅, Ti(EtO)₄, Eu(CH₃COO)₂.
      * L est choisi dans le groupe formé par le lithium, potassium, sodium, calcium. Le sodium est préféré.
      * H est un structurant organique présentant des fonctions ammonium quaternaires et/ou des fonctions amines et/ou des fonctions alcools, de manière préférée H est un amino-alcool.
      * le mélange présentant préférentiellement la composition suivante :

         (XO₂) : (Y₂O₃)ₘ : (Z_{2/n}O)ₚ: (L⁺OH⁻)_{q} : (H₂O)ᵣ : (H)ₛ

         - n étant compris entre 2 et 4,
         - m étant compris entre 0 et 0,2, de préférence entre 0 et 0,05
         - p étant compris entre 0 et 0,2, de préférence entre 0 et 0,05
         - q étant strictement supérieur à 0, et inférieur à 1, de préférence compris entre 0,1 et 0,6
         - r étant généralement supérieur à 10
         - s étant compris entre 0,05 et 3, de préférence entre 0,2 et 1
   - en maintenant une température élevée, entre 100 et 200°C, de préférence entre 135 et 175°C,
   - la durée de synthèse nécessaire à l'obtention d'une structure cristalline étant comprise entre 1 et 20 jours, de préférence entre 2 et 10 jours.
   La cristallisation hydrothermale du solide obtenu est réalisée selon toute méthode connue de l'homme de l'art, de préférence en autoclave. Le mélange réactionnel peut être vigoureusement agité ou pas pendant la cristallisation. Le solide lamellaire cristallisé obtenu à l'issue de cette étape est de type magadiite.
b) Le solide cristallisé est séparé du mélange par toute méthode connue de l'homme de l'art telle que la filtration. Le solide est lavé à l'eau, de préférence déionisée, puis est séché entre 50 et 150°C, de préférence entre 60 et 100°C pour généralement une durée de 12 à 30h . Le séchage est réalisé à pression atmosphérique de préférence, mais peut être effectué sous pression.
c) Le solide est ensuite traité avec une solution contenant un agent gonflant dans des conditions opératoires permettant l'incorporation de cet agent gonflant entre les feuillets par toute méthode connue de l'homme du métier. Ce traitement permet d'augmenter la distance entre les feuillets par incorporation d'un agent gonflant. Un exemple de traitement avec une solution contenant un agent gonflant est notamment décrit dans le brevet US 6 469 226 B1.
   Les agents gonflants susceptibles d'être utilisés sont par exemple choisis parmi les formes hydroxydes et/ou chlorures et/ou bromures d'alkyl ammonium quaternaire, soit par exemple le octyltriméthylammonium, lé dodécyltriméthylammonium, le cethyltriméthylammonium, l'hexadecyltriméthylammonium, le tetrapropylammonium.
d) Le solide gonflé est ensuite délaminé au moins partiellement. Ce traitement de délaminage est appliqué sur le solide traité avec une solution contenant un agent gonflant.
   On entend par traitement de délaminage tout traitement permettant de diminuer fortement les forces d'interaction entre les feuillets de manière à rompre la cohésion entre les feuillets, à séparer les feuillets les uns des autres et à disperser les feuillets.
   Le traitement de délaminage peut être de préférence un traitement mécanique (agitation forte) ou l'utilisation d'ultrasons ou toute autre méthode connue de l'homme du métier rentrant dans la définition précédente.
   Une suspension du solide gonflé dans l'eau est préparée avec un rapport massique entre l'eau et le solide gonflé compris entre 4 et 200 pour 1, de préférence entre 10 et 100 pour 1 et de manière préférée entre 20 et 60 pour 1. Cette suspension est agitée selon un processus contrôlé de manière à délaminer au moins partiellement le solide gonflé.
   Le délaminage tel que défini précédemment peut être obtenu par tout moyen de délaminage connu de l'homme de l'art.
   De préférence, le délaminage est obtenu soit par un moyen mécanique, par exemple sous forte agitation, soit par un traitement sous ultra son.
   Le délaminage peut être obtenu en traitant la suspension par un de ces traitements ou par la combinaison de plusieurs de ces modes de traitement, pendant une durée comprise entre 0,5 et 100h, de préférence comprise entre 1 et 20 heures.
   Le traitement de délaminage même partiel peut entraîner une gélification du système qui rend difficile la filtration de la suspension. A cet effet, un traitement acide peut être effectué à la suite du traitement de délaminage pour favoriser la floculation de la suspension. Des floculants, généralement acides, tels que par exemple HCl, HNO3 ou l'acide acétique peuvent être ajoutés pour favoriser la récupération du solide dispersé.
e) Le solide délaminé obtenu peut être séché à des températures comprises entre 80 et 150°C,
f) le solide peut ensuite être calciné à des températures comprises entre 300 et 800°C, de préférence à des températures comprises entre 400 et 600°C. Le traitement de calcination s'effectue généralement sous flux gazeux (air, oxygène par exemple).

L'invention porte également sur le solide cristallisé obtenu par le procédé de préparation décrit ci-dessus.
Le matériau obtenu est appelé UVL-1 Ce matériau présente un diagramme de diffraction de rayons X incluant au moins les raies inscrites dans le tableau 1.

### Procédés d' hydrocraquage / hydroconversion et hydrotraitement

L'invention concerne également les procédés d'hydrocraquage / hydroconversion mettant en oeuvre les solides selon l'invention dans la composition des catalyseurs, lesdits procédés couvrant les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.
De façon générale, les catalyseurs mettant en oeuvre dans leur composition les solides selon l'invention sont utilisés pour le traitement des coupes hydrocarbonées. Les catalyseurs mettant en oeuvre dans leur composition les solides selon l'invention sont utilisés avantageusement pour l'hydrocraquage et/ou l'hydroconversion de coupes hydrocarbonées.

Les catalyseurs mettant en oeuvre dans leur composition les solides selon l'invention contiennent également au moins un élément hydro-déshydrogénant (généralement au moins un élément des groupes VIB et VIII, et le plus souvent au moins un élément du groupe VIB et au moins un élément du groupe VIII non noble).

Les catalyseurs mettant en oeuvre dans leur composition les solides selon l'invention peuvent être utilisé seuls, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un solide d'hydroraffinage situé en amont du solide de la présente invention.
Les catalyseurs mettant en oeuvre dans leur composition les solides selon l'invention peuvent être utilisé seuls, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydroraffinage situé dans un réacteur en lit fixe ou en lit bouillonnant en amont du solide de la présente invention.
Le lit bouillonnant s'opère avec retrait de catalyseur usé et ajout journalier de catalyseur neuf afin de conserver une activité du catalyseur stable.

Dans un schéma d'hydrocraquage dit en deux étapes avec séparation intermédiaire entre les deux zones réactionnelles, dans une étape donnée, les catalyseurs mettant en oeuvre dans leur composition les solides selon l'invention peuvent être utilisé dans l'un ou dans les deux réacteurs en association ou non avec un catalyseur d'hydroraffinage situé en amont du solide de la présente invention.

Les conditions opératoires de l'hydrocraquage telles que température, pression, taux de recyclage d'hydrogène, vitesse spatiale horaire, pourront être très variables en fonction de la nature de la charge, de la qualité des produits désirés et des installations dont dispose le raffineur. Le catalyseur d'hydrocraquage est mis en contact, en présence d'hydrogène, avec les charges décrites précédemment, à une température supérieure à 200°C, souvent comprise entre 250 et 480°C, avantageusement comprise entre 320 et 450°C, de préférence entre 330 et 435°C, sous une pression supérieure à 1 MPa, souvent comprise entre 2 et 25 MPa, de manière préférée entre 3 et 20 MPa, la vitesse spatiale étant comprise entre 0,1 et 20h⁻¹ et de préférence 0,1-6h⁻¹, de préférence, 0,2-3h⁻¹, et la quantité d'hydrogène introduite est telle que le rapport volumique litre d'hydrogène / litre d'hydrocarbure soit compris entre 80 et 5000l/l et le plus souvent entre 100 et 2000 l/l.
Ces conditions opératoires utilisées dans le procédé selon l'invention permettent d'atteindre des conversions par passe, en produits ayant des points d'ébullition inférieurs à 340°C, et mieux inférieurs à 370°C, supérieures à 15% et de manière encore plus préférée comprises entre 20 et 95%.
L'invention concerne également les procédés d'hydroraffinage et d'hydrotraitement mettant en oeuvre les solides selon l'invention dans la composition des catalyseurs.

Les catalyseurs mettant en oeuvre dans leur composition les solides selon l'invention sont utilisés pour l"hydroraffinage et l'hydrotraitement de charges hydrocarbonées telles que les coupes pétrolières, les coupes issues du charbon ou les hydrocarbures produits à partir du gaz naturel et plus particulièrement pour l'hydrogénation, l'ouverture de cycles, l'hydrodésazotation, l'hydrodéoxygénation, l'hydrodésaromatisation, l'hydrodésulfuration et l'hydrodémétallisation de charges hydrocarbonées contenant des composés aromatiques et/ou oléfiniques et/ou naphténiques et/ou paraffiniques, lesdites charges contenant éventuellement des métaux et/ou de l'azote et/ou de l'oxygène et/ou du soufre.

Plus particulièrement, les charges employées dans les procédés d"hydroraffinage et d'hydrotraitement sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent en général des hétéroatomes tels que le soufre, l'oxygène et l'azote et/ou au moins un métal.

Comme rappelé précédemment, les catalyseurs mettant en oeuvre dans leur composition les solides selon l'invention peuvent être utilisés dans un grand nombre d'applications d'hydroraffinage ou d'hydrotraitement. Les catalyseurs mettant en oeuvre dans leur composition les solides selon l'invention contiennent également au moins un élément hydro-déshydrogénant (généralement au moins un élément des groupes VIB et VIII, et le plus souvent au moins un élément du groupe VIB et au moins un élément du groupe VIII non noble).
Les conditions opératoires qui peuvent être appliquées dans ces procédés sont habituellement : une température de 180 à 450 °C (de façon préférée entre 250 et 440 °C), une pression de 0,5 à 30 MPa (de façon préférée entre 1 et 18 MPa), une vitesse volumique horaire de 0,1 à 20 h⁻¹ (de façon préférée entre 0,2 et 5 h⁻¹), un rapport hydrogène/charge exprimé en volume d'hydrogène, mesuré dans les conditions normales de température et pression, par volume de charge liquide généralement de 50 l/l à 2000 l/l.

Les exemples suivants illustrent la présente invention sans toutefois en limiter la portée.

### Exemple 1 : Préparation et mise en forme d'un solide S1 conforme à l'invention

Une solution comprenant 97% en poids de Trans - 4 - aminocyclohexanol et de silice (Ludox AS-40 commercialisée par Aldrich) est incorporée dans une solution basique de soude NaOH (98% poids), d'eau et du cation Al selon les compositions molaires décrites dans le tableau 6 ci-dessous.

**Tableau 6**

| *Echantillon* | Composition mélange (molaire) |
|---|---|
| Al - Magadiite | SiO2 : 0,2 NaOH : 0,50 Trans-4-aminocyclohexanol : 15 H2O : 0,01 Al₂O₃ |

Le mélange est agité vigoureusement pendant deux heures. Le mélange est ensuite transféré, après homogénéisation, dans une chemise de téflon qui est ensuite placée dans une étuve de Téflon qui est ensuite placée dans un autoclave.
L'autoclave est chauffé pendant 3 jours à 150°C dans une étuve. Pendant la synthèse, l'autoclave est continuellement agité. Le produit cristallisé obtenu est filtré, lavé à l'eau déionisée (pour atteindre un pH neutre) puis séché une nuit à 60°C.

Le produit cristallisé obtenu est un composé lamellaire de type magadiite avec Si/Al=50. Ce produit est ensuite traité avec une solution contenant un agent gonflant dans des conditions opératoires permettant l'incorporation de cet agent gonflant entre les feuillets.
Une solution de composition massique suivante est préparée : 20% massique d'hexadecyltrimetylammonium, 8% massique d'hydroxyde de tétrapropylammonium, complément avec de l'eau déionisée.
Le produit cristallisé obtenu est introduit dans cette solution dans ces proportions : 1 g de produit cristallisé, 30 g de solution.
La suspension obtenue est maintenue pendant 16h à 95°C sous reflux et agitation vigoureuse. Ensuite, la suspension est lavée avec de l'eau jusqu'à séparation de la phase liquide du solide obtenu. Le solide gonflé obtenu est ensuite délaminé.

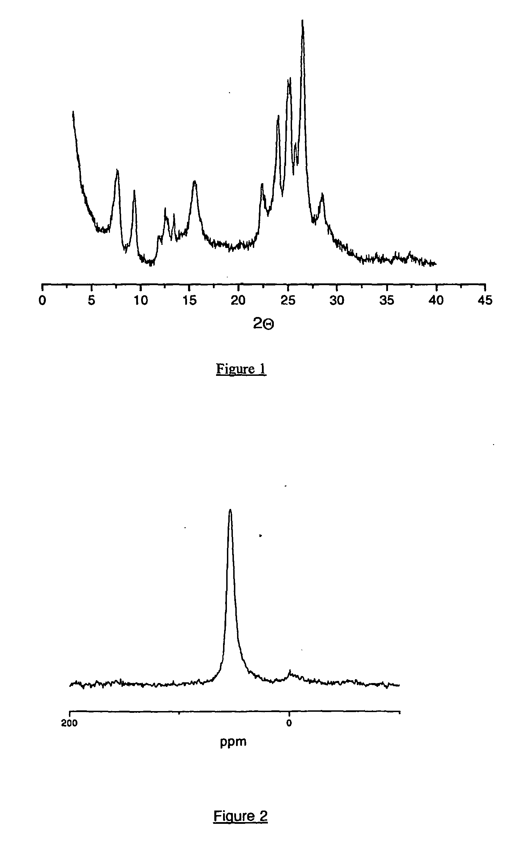

Le traitement de délaminage suivant est appliqué sur le solide traité avec une solution contenant un agent gonflant.
Le solide gonflé est mis dans l'eau déionisée : 45 g d'eau déionisée / g de solide gonflé.
La suspension obtenue après agitation vigoureuse est traitée par des ultrasons pendant une heure dans ces conditions : ultrasons avec une fréquence de 50 Hz et une puissance de 50 watts. Une solution acide HCl 6M est ajoutée à la suspension jusqu'à l'obtention d'un pH de 2. La suspension obtenue après traitement sous ultrasons est centrifugée (12000 tours minutes pendant 20 minutes).
Le solide obtenu est lavé à l'eau déionisée (pour atteindre un pH neutre). Le solide obtenu est séché pendant 16h à 100°C puis calciné à 580°C pendant 7 h.
On obtient alors le solide UVL-1 de type aluminosilicate.
Le diffractogramme effectué sur le solide UVL-1 de type aluminosilicate est présenté figure n°1. Le diagramme de diffraction des rayons X de cet aluminosilicate cristallisé présente toutes les raies de diffraction décrites dans le tableau 1 et les raies supplémentaires suivantes aux angles 2 thêta de 9,34°, 12,5°, 13,4°, 22,35°, 25,70°, 34,00°.

Le solide UVL-1 de type aluminosilicate obtenu présente les caractéristiques suivantes :
- surface spécifique de 230 m²/g
- rapport atomique Si/Al obtenu par absorption atomique de 50
- l'intégralité de l'aluminium est dans la coordination tétraédrique comme l'indique le spectre RMN de ²⁷Al (figure n°2).
- acidité de Bronsted et de Lewis déterminée par IR après adsorption de pyridine. Les résultats sont présentés dans le tableau 7 ci-dessous.

**Tableau 7**

| Température (ºC) | Acidité de Bronsted (mmol Py/g) | Acidité de Lewis (mmol Py/g) | Rapport Bronsted /Lewis |
|---|---|---|---|
| 150 | 14.5 | 4.2 | 3.4 |
| 250 | 11.7 | 3.3 | 3.5 |
| 350 | 8.5 | 3.9 | 2.1 |

### Exemple 2 : Préparation et mise en forme d'un solide S2 conforme à l'invention avec un métal Co

Une solution comprenant 97% en poids de Trans - 4 - aminocyclohexanol et de silice (Ludox AS-40 commercialisée par Aldrich) est incorporée dans une solution basique de soude NaOH (98% poids), d'eau et du cation Co selon les compositions molaires décrites dans le tableau 4 ci-dessous.

**Tableau 4**

| *Echantillons* | Composition mélange (molaire) |
|---|---|
| Co - Magadiite | Si02 : 0,2 NaOH : 0,50 Trans-4-aminocyclohexanol : 15 H2O : 0,02 Co(CH3COO)₂ |

Le mélange est agité vigoureusement pendant deux heures. Le mélange est ensuite transféré, après homogénéisation, dans une chemise de téflon qui est ensuite placée dans une étuve de Téflon qui est ensuite placée dans un autoclave.
L'autoclave est chauffé pendant 3 jours à 150°C dans une étuve. Pendant la synthèse, l'autoclave est continuellement agité. Le produit cristallisé obtenu est filtré, lavé à l'eau déionisée (pour atteindre un pH neutre) puis séché une nuit à 60°C.

Le produit cristallisé obtenu est un composé lamellaire de type magadiite avec Si/Co=50. Ce produit est ensuite traité avec une solution contenant un agent gonflant dans des conditions opératoires permettant l'incorporation de cet agent gonflant entre les feuillets.
Une solution de composition massique suivante est préparée : 20% massique d'hexadecyltrimetylammonium, 8% massique d'hydroxyde de tétrapropylammonium, complément avec de l'eau déionisée.
Le produit cristallisé obtenu est introduit dans cette solution dans ces proportions : 1 g de produit cristallisé, 30 g de solution.
La suspension obtenue est maintenue pendant 16h à 95°C sous reflux et agitation vigoureuse. Ensuite, la suspension est lavée avec de l'eau jusqu'à séparation de la phase liquide du solide obtenu. Le solide gonflé obtenu est ensuite délaminé.

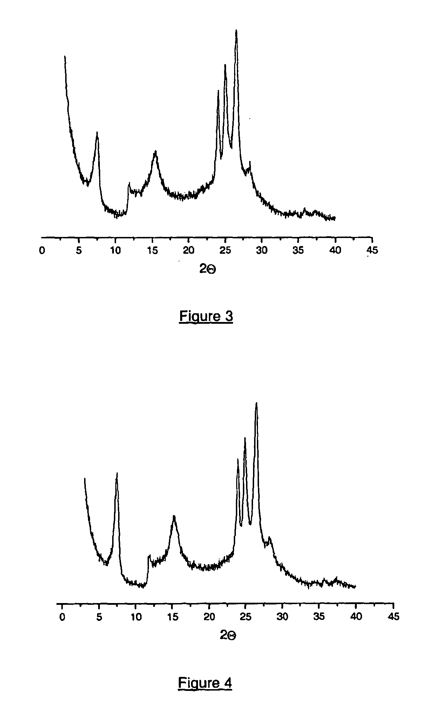

Le traitement de délamination suivant est appliqué sur le solide traité avec une solution contenant un agent gonflant.
Le solide gonflé est mis dans l'eau déionisée : 45 g d'eau déionisée / g de solide gonflé.
La suspension obtenue après agitation vigoureuse est traitée par des ultrasons pendant une heure dans ces conditions : ultrasons avec une fréquence de 50 Hz et une puissance de 50 watts. Une solution acide HCl 6M est ajoutée à la suspension jusqu'à l'obtention d'un pH de 2. La suspension obtenue après traitement sous ultrasons est centrifugée (12000 tours minutes pendant 20 minutes). Le solide obtenu est lavé à l'eau déionisée (pour atteindre un pH neutre). Le solide obtenu est séché pendant 16h à 100°C puis calciné à 580°C pendant 7 h.
On obtient alors le solide UVL-1.
Le diffractogramme effectué sur le solide UVL-1 de type silicate de cobalt est présenté figure n°3.

Le solide UVL-1 obtenu présente les caractéristiques suivantes :
- surface spécifique de 214 m²/g
- rapport atomique Si/Co obtenu par FX de 50.

### Exemple 3 : Préparation et mise en forme d'un solide S3 conforme à l'invention avec un métal Ti

Une solution comprenant 97% en poids deTrans - 4 - aminocyclohexanol et de silice (Ludox AS-40 commercialisée par Aldrich) est incorporée dans une solution basique de soude NaOH (98% poids), d'eau et du cation Ti selon les compositions molaires décrites dans le tableau 5 ci-dessous.

**Tableau 5**

| *Echantillons* | Composition mélange (molaire) |
|---|---|
| Ti - Magadiite | SiO2 : 0,2 NaOH : 0,50 Trans-4-aminocyclohexanol : 15 H2O : 0,01 Ti(EtO)4 |

Le mélange est agité vigoureusement pendant deux heures. Le mélange est ensuite transféré, après homogénéisation, dans une chemise de téflon qui est ensuite placée dans une étuve de Téflon qui est ensuite placée dans un autoclave.
L'autoclave est chauffé pendant 3 jours à 150°C dans une étuve. Pendant la synthèse, l'autoclave est continuellement agité. Le produit cristallisé obtenu est filtré, lavé à l'eau déionisée (pour atteindre un pH neutre) puis séché une nuit à 60°C.

Le produit cristallisé obtenu est un composé lamellaire de type magadiite avec Si/Ti=100. Ce produit cristallisé obtenu est ensuite traité avec une solution contenant un agent gonflant dans des conditions opératoires permettant l'incorporation de cet agent gonflant entre les feuillets.
Une solution de composition massique suivante est préparée : 20% massique d'hexadecyltrimetylammonium, 8% massique d'hydroxyde de tétrapropylammonium, complément avec de l'eau déionisée.
Le produit cristallisé obtenu est introduit dans cette solution dans ces proportions : 1 g de produit cristallisé, 30 g de solution.
La suspension obtenue est maintenue pendant 16h à 95°C sous reflux et agitation vigoureuse. Ensuite, la suspension est lavée avec de l'eau jusqu'à séparation de la phase liquide du solide obtenu. Le solide gonflé obtenu est ensuite délaminé.

Le traitement de délamination suivant est appliqué sur le solide traité avec une solution contenant un agent gonflant.
Le solide gonflé est mis dans l'eau déionisée : 45 g d'eau déionisée / g de solide gonflé.

La suspension obtenue après agitation vigoureuse est traitée par des ultrasons pendant une heure dans ces conditions : ultrasons avec une fréquence de 50 Hz et une puissance de 50 watts. Une solution acide HCl 6M est ajoutée à la suspension jusqu'à l'obtention d'un pH de 2. La suspension obtenue après traitement sous ultrasons est centrifugée (12000 tours minutes pendant 20 minutes). Le solide obtenu est lavé à l'eau déionisée (pour atteindre un pH neutre). Le solide obtenu est séché pendant 16h à 100°C puis calciné à 580°C pendant 7 h.
On obtient alors le solide UVL-1.
Le diffractogramme effectué sur le solide UVL-1 contenant du titane est présenté figure n°4.

Le solide UVL-1 obtenu présente les caractéristiques suivantes :
- surface spécifique de 160 m²/g
- rapport atomique Si/Ti obtenu par par absorption atomique de 100.

### Exemple 4 : Préparation et mise en forme d'un solide S4 conforme à l'invention avec un métal Ni

Une solution comprenant 97% en poids de Trans - 4 - aminocyclohexanol et de silice (Ludox AS-40 commercialisée par Aldrich) est incorporée dans une solution basique de soude NaOH (98% poids), d'eau et du cation Ni selon les compositions molaires décrites dans le tableau 6 ci-dessous.

**Tableau 6**

| *Echantillons* | Composition mélange (molaire) |
|---|---|
| Ni - Magadiite | SiO2 : 0,2 NaOH : 0,50 Trans-4-aminocyclohexanol : 15 H2O : 0,02 Ni(CH3COO)₂ |

Le mélange est agité vigoureusement pendant deux heures. Le mélange est ensuite transféré, après homogénéisation, dans une chemise de téflon qui est ensuite placée dans une étuve de Téflon qui est ensuite placée dans un autoclave.
L'autoclave est chauffé pendant 3 jours à 150°C dans une étuve. Pendant la synthèse, l'autoclave est continuellement agité. Le produit cristallisé obtenu est filtré, lavé à l'eau déionisée (pour atteindre un pH neutre) puis séché une nuit à 60°C.

Le produit cristallisé obtenu est un composé lamellaire de type magadiite avec Si/Ni=50. Ce produit Ce produit cristallisé obtenu est ensuite traité avec une solution contenant un agent gonflant dans des conditions opératoires permettant l'incorporation de cet agent gonflant entre les feuillets.

Une solution de composition massique suivante est préparée : 20% massique d'hexadecyltrimetylammonium, 8% massique d'hydroxyde de tétrapropylammonium, complément avec de l'eau déionisée.
Le produit cristallisé obtenu est introduit dans cette solution dans ces proportions : 1 g de produit cristallisé, 30 g de solution.
La suspension obtenue est maintenue pendant 16h à 95°C sous reflux et agitation vigoureuse. Ensuite, la suspension est lavée avec de l'eau jusqu'à séparation de la phase liquide du solide obtenu. Le solide gonflé obtenu est ensuite délaminé.

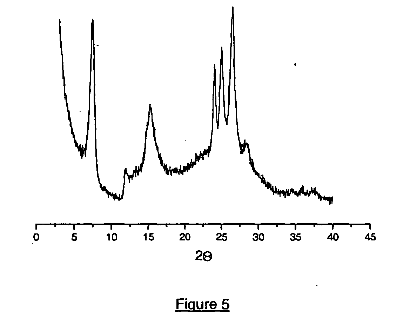

Le traitement de délamination suivant est appliqué sur le solide traité avec une solution contenant un agent gonflant.
Le solide gonflé est mis dans l'eau déionisée : 45 g d'eau déionisée / g de solide gonflé.
La suspension obtenue après agitation vigoureuse est traitée par des ultrasons pendant une heure dans ces conditions : ultrasons avec une fréquence de 50 Hz et une puissance de 50 watts. Une solution acide HCl 6M est ajoutée à la suspension jusqu'à l'obtention d'un pH de 2. La suspension obtenue après traitement sous ultrasons est centrifugée (12000 tours minutes pendant 20 minutes). Le solide obtenu est lavé à l'eau déionisée (pour atteindre un pH neutre). Le solide obtenu est séché pendant 16h à 100°C puis calciné à 580°C pendant 7 h.
On obtient alors le solide UVL-1.
Le diffractogramme effectué sur le solide UVL-1 contenant du nickel est présenté figure n°5.

Le solide UVL-1 obtenu présente les caractéristiques suivantes :
- surface spécifique de 188 m²/g
- rapport atomique Si/Ni obtenu par absorption atomique de 50.

### Exemple 5 : Test d'activité catalytique du solide S1 conforme à l'invention

Le solide S1 conforme à l'invention de type aluminosilicate est évalué en hydrocraquage du n-hexadécane.
Le solide S1 de type aluminosilicate avec Si/Al=50 préparé selon le protocole décrit exemple 1 est imprégné avec une solution d'acide hexachloroplatinique. La teneur en platine obtenue après imprégnation à sec est de 1 % massique.
Un catalyseur de référence est préparé à partir d'une silice-alumine commerciale ASA-25 dont la teneur massique en silice est de 25%. La silice-alumine ASA-25 est imprégnée à sec avec une solution d'acide hexachloroplatinique de manière à obtenir une teneur massique en platine de 1 %.

Les catalyseurs imprégnés à sec sont ensuite séchés à 100°C pendant 3h puis calcinés en four à moufle à 500°C pendant 3 heures.
Les catalyseurs obtenus Pt/S1 et Pt/ASA-25 sont évalués en hydrocraquage de n-hexadécane (n-C16). Le test d'hydrocraquage est réalisé sur un réacteur à lit de catalyseur fixe et à flux traversé continu. Les catalyseurs sont réduits in situ avant la réalisation du test d'hydrocraquage. La réduction est réalisée à pression atmosphérique, sous flux continu d'H2 pur (150cm³.min⁻¹.g⁻¹ de catalyseur), à 150°C pendant 2 heures. Les tests d'hydrocraquage sont réalisés à une pression totale de 4,0 MPa, à une température de 300°C, sous flux d'hydrogène et de n-hexadécane, avec un rapport molaire H2/n-C16 de 90, avec un débit de n-hexadécane de 3,5 g.g⁻¹ de catalyseur. Les résultats obtenus sont reportés tableau 7. Le catalyseur préparé à partir du solide S1 conforme à l'invention présente une activité en conversion du n-C16 supérieure à l'activité obtenue sur le catalyseur préparé à partir de la silice-alumine. Le catalyseur préparé à partir du solide S1 conforme à l'invention présente une sélectivité en produits de craquage nettement supérieure à la sélectivité obtenue sur le catalyseur préparé à partir de la silice-alumine. Le catalyseur S1 conforme à l'invention présente une activité en hydrocraquage du n-C16 supérieure à l'activité obtenue sur le catalyseur préparé à partir de la silice-alumine.

**Tableau 7**

| | Conversion du n-C16 en % | rendement en produits d'isomérisation du n-C16 en % | rendement en produits de craquage du n-C16 en % | sélectivité en craquage en % |
|---|---|---|---|---|
| Pt/S1 | 85 | 4 | 81 | 95 |
| Pt/ASA-25 | 70 | 36 | 34 | 48 |

## Revendications

1. Solide cristallisé UVL-1 présentant un diagramme de diffraction de rayons X incluant au moins les raies inscrites dans le tableau ci-dessous :
| dₕₖₗ (A) | 2 thêta (°) | I/Io |
|---|---|---|
| 11,69 | 7,55 | mf à FF |
| 7,50 | 11,79 | ff à f |
| 5,76 | 15,36 | f à m.f |
| 3,70 | 24,00 | m à F |
| 3,57 | 24,91 | F |
| 3,36 | 26,49 | FF |
| 3,14 | 28,48 | f à mf |
| 2,50 | 35,88 | ff |
| 2,41 | 37,30 | ff |
où FF = très fort ; m = moyen ; f = faible ; F = fort ; mf = moyen faible ; ff = très faible et présentant une composition chimique exprimée sur une base anhydre, en termes de mole d'oxydes:
(XO₂) : (Y₂O₃)ₘ : (Z_{2/n}O)ₚ
où :
X représente au moins un élément tétravalent choisi dans le groupe formé par Si, Ge,
Y représente au moins un élément trivalent sélectionné parmi Al, B, Cr, Ga,
Z représente au moins un cation de valence n,
et où n est compris entre 2 et 4,
m est compris entre 0 et 0.2,
et p est compris entre 0 et 0.2.

2. Solide cristallisé UVL-1 selon la revendication 1 dans lequel m et p sont compris entre 0 et 0.05.

3. Solide cristallisé UVL-1 selon la revendication 1 ou 2 dans lequel l'élément tétravalent X est le silicium.

4. Solide cristallisé UVL-1 selon l'une des revendications précédentes dans lequel l'élément trivalent Y est l'aluminium.

5. Solide cristallisé UVL-1 selon l'une des revendications précédentes dans lequel le cation Z de valence n est choisi dans le groupe formé par Ni, Zr, Co, Cu, Nb, Ti, Eu, In.

6. Solide cristallisé UVL-1 selon l'une des revendications précédentes dans lequel le cation Z de valence n est Ni.

7. Solide cristallisé selon la revendication 1 ou 2 dans lequel X est le silicium et Y est l'aluminium et qui présente un diagramme de diffraction X incluant au moins les raies suivantes :
| dₕₖₗ (A) | 2 thêta (°) | I/Io |
|---|---|---|
| 11,69 | 7,55 | mf |
| 9,45 | 9,34 | f |
| 7,50 | 11,79 | ff |
| 7,06 | 12,51 | f |
| 6,58 | 13,44 | f |
| 5,76 | 15,36 | f |
| 3,97 | 22,35 | f |
| 3,70 | 24,00 | m |
| 3,57 | 24,91 | F |
| 3,46 | 25,70 | mf |
| 3,36 | 26,49 | FF |
| 3,14 | 28,48 | f |
| 2,63 | 34,00 | ff |
| 2,50 | 35,88 | ff |
| 2,41 | 37,30 | ff |
où FF = très fort; m = moyen ; f = faible ; F = fort ; mf = moyen faible ; ff = très faible.

8. Solide cristallisé selon la revendication 1 ou 2 dans lequel X est le silicium et Z le cobalt et qui présente un diagramme de diffraction X incluant au moins les raies suivantes :
| dₕₖₗ (A) | 2 thêta (°) | I/Io |
|---|---|---|
| 11,69 | 7,55 | mf |
| 7,50 | 11,79 | ff |
| 5,76 | 15,36 | f |
| 3,70 | 24,00 | m |
| 3,57 | 24,91 | F |
| 3,36 | 26,49 | FF |
| 3,14 | 28,48 | f |
| 2,50 | 35,88 | ff |
| 2,41 | 37,30 | ff |
où FF = très fort ; m = moyen ; f = faible ; F = fort ; mf = moyen faible ; ff = très faible.

9. Solide cristallisé selon la revendication 1 ou 2 dans lequel X est le silicium et Z le nickel et qui présente un diagramme de diffraction X incluant au moins les raies suivantes :
| dₕₖₗ (A) | 2 thêta (°) | I/Io |
|---|---|---|
| 11,69 | 7,55 | FF |
| 7,50 | 11,79 | ff |
| 5,76 | 15,36 | mf |
| 3,70 | 24,00 | m |
| 3,57 | 24,91 | F |
| 3,36 | 26,49 | FF |
| 3,14 | 28,48 | f |
| 2,50 | 35,88 | ff |
| 2,41 | 37,30 | ff |
où FF = très fort ; m = moyen ; f = faible ; F = fort ; mf = moyen faible ; ff = très faible.

10. Solide cristallisé selon la revendication 1 ou 2 dans lequel X est le silicium et Z le titane et qui présente un diagramme de diffraction X incluant au moins les raies suivantes :
| dₕₖₗ (A) | 2 thêta (°) | I/Io |
|---|---|---|
| 11,69 | 7,55 | m |
| 7,50 | 11,79 | ff |
| 5,76 | 15,36 | f |
| 3,70 | 24,00 | F |
| 3,57 | 24,91 | F |
| 3,36 | 26,49 | FF |
| 3,14 | 28,48 | f |
| 2,50 | 35,88 | ff |
| 2,41 | 37,30 | ff |
où FF = très fort ; m = moyen ; f = faible ; F = fort ; mf = moyen faible ; ff = très faible.

11. Solide cristallisé UVL-1 selon l'une des revendications précédentes présentant une surface BET supérieure à 80 m²/g.

12. Solide cristallisé UVL-1 selon la revendication 11 présentant une surface BET comprise entre 150 m²/g et 700 m²/g.

13. Solide cristallisé UVL-1 selon la revendication 12 présentant une surface BET comprise entre 200 m²/g et 600 m²/g.

14. Procédé de préparation d'un solide cristallisé selon l'une des revendications précédentes comprenant les étapes suivantes;
a) synthèse d'un solide lamellaire cristallisé par mélange d'une source d'au moins un métal tétravalent X, éventuellement d'une source d'un ou plusieurs autres métaux Y, éventuellement d'une source d'un ou plusieurs autres métaux Z, d'un métal alcalin L, d'un structurant organique H et d'eau,
* X représente au moins un élément tétravalent choisi dans le groupe formé par Si, Ge
* Y représente au moins un élément trivalent sélectionné parmi Al, B, Cr, Ga,.
* Z représente au moins un cation de valence n,
* L est choisi dans le groupe formé par le lithium, potassium, sodium, calcium.
* H est un structurant organique présentant des fonctions ammonium quaternaires et/ou amines et/ou alcools,
* le mélange présentant la composition suivante :
(XO₂) : (Y₂O₃)ₘ : (Z_{2/n}O)ₚ : (L⁺OH⁻)_{q} : (H₂O)ᵣ : (H)ₛ
● n étant compris entre 2 et 4,
● m étant compris entre 0 et 0,2,
● p étant compris entre 0 et 0,2,
● q étant strictement supérieur à 0, et inférieur à 1,
● r étant supérieur à 10
● s étant compris entre 0,05 et 3,
à une température élevée, entre 104 et 200°C, pour une durée de synthèse comprise entre 1 et 20 jours suivie d'une cristallisation hydrothermale du solide obtenu, le solide lamellaire cristallisé obtenu à l'issu de l'étape a) étant de type magadiite.
b) séparation, lavage à l'eau et séchage entre 50 et 150°C du solide cristallisé,
c) traitement du solide cristallisé avec une solution contenant un agent gonflant,
d) traitement de délaminage au moins partiel du solide gonflé.

15. Procédé de préparation selon la revendication 14 dans lequel le traitement de délaminage de l'étape d) est effectué par un moyen choisi dans les traitements suivants effectués seuls ou en combinaison : traitement mécanique et traitement sous ultra son.

16. Procédé de préparation selon l'une des revendications 14 ou 15 dans lequel le traitement de délaminage de l'étape d) est suivi d'un traitement acide.

17. Procédé de préparation selon l'une des revendications 14 à 16 dans lequel une étape e) de séchage à une température comprise entre 80 et 150°C suit le traitement de délaminage de l'étape d).

18. Procédé de préparation selon la revendication 17 dans lequel une étape de calcination f) à une température comprise entre 300 et 800°C suit l'étape de séchage.

19. Procédé d'hydrocraquage / hydroconversion utilisant le solide cristallisé selon l'une des revendications 1 à 13.

20. Procédé d'hydroraffinage utilisant le solide cristallisé selon l'une des revendications 1 à 13

## Claims

1. A crystalline solid UVL-1 having an X ray diffraction diagram including at least the peaks described in the table below:
| dₕₖₗ (A) | 2theta (°) | I/I₀ |
|---|---|---|
| 11.69 | 7.55 | mw to vs |
| 7.50 | 11.79 | vw to w |
| 5.76 | 15.36 | w to mw |
| 3.70 | 24.00 | m to s |
| 3.57 | 24.91 | s |
| 3.36 | 26.49 | vs |
| 3.14 | 28.48 | w to mw |
| 2.50 | 35.88 | vw |
| 2.41 | 37.30 | vw |
in which vs = very strong; m = medium; w = weak; s = strong; mw = medium weak; vw = very weak.
and with the following chemical composition, expressed as the anhydrous compound in terms of moles of oxide:
(XO₂): (Y₂O₃)ₘ: (Z_{2/n}O)ₚ
in which:
X represents at least one tetravalent element selected from the group formed by Si,
Gc; Y represents at least one trivalent element selected from Al, B, Cr, Ga; Z represents at least one cation with valency n;
and in which:
n is in the range 2 to 4; m is in the range 0 to 0.2; and p is in the range 0 to 0.2.

2. A crystalline solid UVL-1 according to claim 1, in which m and p are in the range 0 to 0.05.

3. A crystalline solid UVL-1 according to claim 1 or claim 2, in which the tetravalent element X is silicon.

4. A crystalline solid UVL-1 according to one of the preceding claims, in which the trivalent element Y is aluminium.

5. A crystalline solid UVL-1 according to one of the preceding claims, in which the cation Z with valency n is selected from the group formed by Ni, Zr, Co, Cu, Nb, Ti, Eu, In.

6. A crystalline solid UVL-1 according to one of the preceding claims, in which the cation Z with valency n is Ni.

7. A crystalline solid according to claim 1 or claim 2, in which X is silicon and Y is aluminium and which has an X ray diffraction diagram including at least the following peaks:
| dₕₖₗ (A) | 2theta (°) | I/I₀ |
|---|---|---|
| 11.69 | 7.55 | mw |
| 9.45 | 9.34 | w |
| 7.50 | 11.79 | vw |
| 7.06 | 12.51 | w |
| 6.58 | 13.44 | w |
| 5.76 | 15.36 | w |
| 3.97 | 22.35 | w |
| 3.70 | 24.00 | m |
| 3.57 | 24.91 | s |
| 3.46 | 25.70 | mw |
| 3.36 | 26.49 | vs |
| 3.14 | 28.48 | w |
| 2.63 | 34.00 | vw |
| 2.50 | 35.88 | vw |
| 2.41 | 37.30 | vw |
in which vs = very strong; m = medium; w = weak; s = strong; mw = medium weak; vw = very weak.

8. A crystalline solid according to claim 1 or claim 2, in which X is silicon and Z is cobalt and which has an X ray diffraction diagram including at least the following peaks:
| dₕₖₗ (A) | 2theta (°) | I/I₀ |
|---|---|---|
| 11.69 | 7.55 | mw |
| 7.50 | 11.79 | vw |
| 5.76 | 15.36 | w |
| 3.70 | 24.00 | m |
| 3.57 | 24.91 | s |
| 3.36 | 26.49 | vs |
| 3.14 | 28.48 | w |
| 2.50 | 35.88 | vw |
| 2.41 | 37.30 | vw |
in which vs = very strong; m = medium; w = weak; s = strong; mw = medium weak; vw = very weak.

9. A crystalline solid according to claim 1 or claim 2, in which X is silicon and Z is nickel and which has an X ray diffraction diagram including at least the following peaks:
| dₕₖₗ (A) | 2theta (°) | I/I₀ |
|---|---|---|
| 11.69 | 7.55 | vs |
| 7.50 | 11.79 | vw |
| 5.76 | 15.36 | mw |
| 3.70 | 24.00 | m |
| 3.57 | 24.91 | s |
| 3.36 | 26.49 | vs |
| 3.14 | 28.48 | w |
| 2.50 | 35.88 | vw |
| 2.41 | 37.30 | vw |
in which vs = very strong; m = medium; w = weak; s = strong; mw = medium weak; vw = very weak.

10. A crystalline solid according to claim 1 or claim 2, in which X is silicon and Z is titanium and which has an X ray diffraction diagram including at least the following peaks:
| dₕₖₗ (A) | 2theta (°) | I/I₀ |
|---|---|---|
| 11.69 | 7.55 | m |
| 7.50 | 11.79 | vw |
| 5.76 | 15.36 | w |
| 3.70 | 24.00 | s |
| 3.57 | 24.91 | s |
| 3.36 | 26.49 | vs |
| 3.14 | 28.48 | w |
| 2.50 | 35.88 | vw |
| 2.41 | 37.30 | vw |
in which vs = very strong; m = medium; w = weak; s = strong; mw = medium weak; vw = very weak.

11. A crystalline solid UVL-1 according to one of the preceding claims, having a BET specific surface area of more than 80 m²/g.

12. A crystalline solid UVL-1 according to claim 11, having a BET specific surface area in the range 150 m²/g to 700 m²/g.

13. A crystalline solid UVL-1 according to claim 12, having a BET specific surface area in the range 200 m²/g to 600 m²/g.

14. A process for preparing a crystalline solid according to one of the preceding claims comprising the following steps:
a) synthesizing a lamellar crystalline solid by mixing a source of at least one tetravalent metal X, optionally a source of one or more other metals Y, optionally a source of one or more other metals Z, an alkaline metal L, an organic template H and water;
o X represents at least one tetravalent element selected from the group formed by Si, Ge;
o Y represents at least one trivalent element selected from the group formed by Al, B, Cr, Ga;
o Z represents at least one cation with valency n;
o L is selected from the group formed by lithium, potassium, sodium, calcium;
o H is an organic template having quaternary ammonium functions and/or amine functions and/or alcohol functions;
o the mixture having the following composition:
(XO₂): (Y₂O₃)ₘ: (Z_{2/n}O)ₚ: (L⁺OH⁻)_{q}: (H₂O)ᵣ: (H)ₛ
● n is in the range 2 to 4;
● m is in the range 0 to 0.2;
● p is in the range 0 to 0.2;
● q is strictly more than 0 and less than 1;
● r is generally more than 10;
● s is in the range between 0.05 and 3;
at a high temperature, between 100°C and 200°C; for a synthesis period in the range 1 to 20 days followed by hydrothermal crystallization of the solid obtained, the lamellar crystalline solid obtained from step a) is of magadiite type.
b) separating, washing with water and drying the crystalline solid between 50°C and 150°C;
c) treating the crystalline solid with a solution containing a swelling agent;
d) at least partially delaminating the swelled solid.

15. A preparation process according to claim 14, in which the delamination treatment of step d) is carried out employing a means selected from the following treatments carried out alone or in combination: mechanical treatment and ultrasound treatment.

16. A preparation process according to claim 14 or claim 15, in which the delamination treatment of step d) is followed by an acid treatment.

17. A preparation process according to one of claims 14 to 16, in which a step e) for drying at a temperature in the range 80°C to 150°C follows the delamination treatment of step d).

18. A preparation process according to claim 17, in which a calcining step f) carried out at a temperature in the range 300°C to 800°C, follows the drying step.

19. A hydrocracking/hydroconversion process using the crystalline solid according to one of claims 1 to 13.

20. A hydrorefining process using the crystalline solid according to one of claims 1 to 13.

## Patentansprüche

1. Kristallisierter Feststoff UVL-1, der ein Röntgenbeugungsdiagramm aufweist, welches mindestens die Signale umfasst, die in der untenstehenden Tabelle aufgeführt sind:
| dₕₖₗ (A) | 2 theta (°) | I/Io |
|---|---|---|
| 11,69 | 7.55 | ms bis SS |
| 7,50 | 11,79 | ss bis s |
| 5,76 | 15.36 | s bis mf |
| 3,70 | 24,00 | m bis S |
| 3,57 | 24,91 | S |
| 3,36 | 26,49 | SS |
| 3,14 | 28,48 | s bis ms |
| 2,50 | 35,88 | ss |
| 2,41 | 37,30 | ss |
wobei SS = sehr stark; m = mittel; s = schwach; S = stark; ms = mittelschwach; ss = sehr schwach ist und wobei er eine chemische Zusammensetzung aufweist, die auf einer wasserfreien Basis ausgedrückt, in Mol an Oxiden, folgendermaßen ist:
(XO₂) : (Y₂O₃)ₘ : ( Z_{2/n}O)ₚ
wobei
X für mindestens ein vierwertiges Element steht, das aus der Gruppe ausgewählt ist, die von Si, Ge gebildet wird,
Y für mindestens ein dreiwertiges Element steht, das aus Al, B, Cr, Ga ausgewählt ist,
Z für mindestens ein Kation der Valenz n steht,
und wobei n im Bereich von 2 bis 4 liegt,
m im Bereich von 0 bis 0,2 liegt,
und p im Bereich von 0 bis 0,2 liegt.

2. Kristallisierter Feststoff UVL-1 nach Anspruch 1, wobei m und p im Bereich von 0 bis 0,05 liegen.

3. Kristallisierter Feststoff UVL-1 nach Anspruch 1 oder 2, wobei das vierwertige Element X Silicium ist.

4. Kristallisierter Feststoff UVL-1 nach einem der vorhergehenden Ansprüche, wobei das dreiwertige Element Y Aluminium ist.

5. Kristallisierter Feststoff UVL-1 nach einem der vorhergehenden Ansprüche, wobei das Kation Z der Valenz n aus der Gruppe ausgewählt ist, die von Ni, Zr, Co, Cu, Nb, Ti, Eu, In gebildet wird.

6. Kristallisierter Feststoff UVL-1 nach einem der vorhergehenden Ansprüche, wobei es sich bei dem Kation Z der Valenz n um Ni handelt.

7. Kristallisierter Feststoff nach Anspruch 1 oder 2, wobei X Silicium ist und Y Aluminium ist, und er ein Röntgenbeugungsdiagramm aufweist, das mindestens die folgenden Signale umfasst:
| dₕₖₗ(A) | 2 theta (°) | I/Io |
|---|---|---|
| 11,69 | 7,55 | ms |
| 9,45 | 9,34 | s |
| 7,50 | 11,79 | ss |
| 7,06 | 12,51 | s |
| 6,58 | 13,44 | s |
| 5,76 | 15,36 | s |
| 3,97 | 22,35 | s |
| 3,70 | 24,00 | m |
| 3,57 | 24,91 | S |
| 3,46 | 25,70 | ms |
| 3,36 | 26,49 | SS |
| 3,14 | 28,48 | s |
| 2,63 | 34,00 | ss |
| 2,50 | 35,88 | ss |
| 2,41 | 37,30 | ss |
wobei SS = sehr stark; m = mittel; s = schwach; S = stark; ms = mittelschwach; ss = sehr schwach ist.

8. Kristallisierter Feststoff nach Anspruch 1 oder 2, wobei X Silicium ist und Z Kobalt ist, und er ein Röntgenbeugungsdiagramm aufweist, das mindestens die folgenden Signale umfasst:
| dₕₖₗ (A) | 2 theta (°) | I/Io |
|---|---|---|
| 11,69 | 7,55 | ms |
| 7,50 | 11,79 | ss |
| 5,76 | 15,36 | s |
| 3,70 | 24,00 | m |
| 3,57 | 24,91 | S |
| 3,36 | 26,49 | SS |
| 3,14 | 28,48 | s |
| 2,50 | 35,88 | ss |
| 2,41 | 37,30 | ss |
wobei SS ='sehr stark; m = mittel; s = schwach; S = stark; ms = mittelschwach; ss = sehr schwach ist.

9. Kristallisierter Feststoff nach Anspruch 1 oder 2, wobei X Silicium ist und Z Nickel ist, und er ein Röntgenbeugungsdiagramm aufweist, das mindestens die folgenden Signale umfasst:
| dₕₖₗ (A) | 2 theta (°) | I/Io |
|---|---|---|
| 11,69 | 7,55 | SS |
| 7,50 | 11,79 | ss |
| 5,76 | 15,36 | ms |
| 3,70 | 24,00 | m |
| 3,57 | 24,91 | S |
| 3,36 | 26,49 | SS |
| 3,14 | 28,48 | s |
| 2,50 | 35,88 | ss |
| 2,41 | 37,30 | ss |
wobei SS = sehr stark; m = mittel; s = schwach; S = stark; ms = mittelschwach; ss = sehr schwach ist.

10. Kristallisierter Feststoff nach Anspruch 1 oder 2, wobei X Silicium ist und Z Titan ist, und er ein Röntgenbeugungsdiagramm aufweist, das mindestens die folgenden Signale umfasst:
| dₕₖₗ (A) | 2 theta (°) | I/Io |
|---|---|---|
| 11,69 | 7,55 | m |
| 7,50 | 11,79 | ss |
| 5,76 | 15,36 | s |
| 3,70 | 24,00 | s |
| 3,57 | 24,91 | S |
| 3,36 | 26,49 | SS |
| 3,14 | 28,48 | s |
| 2,50 | 35,88 | ss |
| 2,41 | 37,30 | ss |
wobei SS = sehr stark; m = mittel; s = schwach; S = stark; ms = mittelschwach; ss = sehr schwach ist.

11. Kristallisierter Feststoff UVL-1 nach einem der vorhergehenden Ansprüche, der eine BET-Oberfläche von mehr als 80 m²/g aufweist.

12. Kristallisierter Feststoff UVL-1 nach Anspruch 11, der eine BET-Oberfläche im Bereich von 150 m²/g bis 700 m²/g aufweist.

13. Kristallisierter Feststoff UVL-1 nach Anspruch 12, der eine BET-Oberfläche im Bereich von 200 m²/g bis 600 m²/g aufweist

14. Verfahren zur Herstellung eines kristallisierten Feststoffs nach einem der vorhergehenden Ansprüche, welches die folgenden Schritte umfasst:
a) Synthese eines lamellaren Feststoffs, der durch Vermischen einer Quelle mindestens eines vierwertigen Metalls X, möglicherweise einer Quelle eines oder mehrerer weiterer Metalle Y, möglicherweise einer Quelle eines oder mehrerer weiterer Metalle Z, eines Alkalimetalls L, eines organischen Strukturmittels H und von Wasser zur Kristallisation gebracht wird.
* X steht für mindestens ein vierwertiges Element, das aus der Gruppe ausgewählt ist, die von Si, Ge gebildet wird
* Y steht für mindestens ein dreiwertiges Element, das aus Al, B, Cr, Ga ausgewählt ist.
* Z steht für mindestens ein Kation der Valenz n.
* L ist aus der Gruppe gewählt, die von Lithium, Kalium, Natrium, Calcium gebildet wird.
* H ist ein organisches Strukturmittel, das funktionelle Gruppen der Art quartäres Ammonium und/oder Amin und/oder Alkohol aufweist.
* Dabei weist die Mischung die folgende Zusammensetzung auf:
(XO₂) : (Y₂O₃)ₘ : (Z_{2/n}O)ₚ : (L⁺OH⁻)_{q} : (H₂O)ᵣ: (H)ₛ
● wobei n im Bereich von 2 bis 4 liegt,
● wobei m im Bereich von 0 bis 0,2 liegt,
● wobei p im Bereich von 0 bis 0,2 liegt,
● wobei q zwingend größer als 0 und kleiner als 1 ist,
● wobei r größer als 10 ist
● wobei s im Bereich von 0,05 bis 3 liegt,
und zwar bei einer erhöhten Temperatur, zwischen 100 und 200 °C, wobei die Synthesedauer im Bereich von 1 bis 20 Tagen liegt, woraufhin eine hydrothermale Kristallisation des erhaltenen Feststoffs erfolgt, wobei der lamellare Feststoff, der nach Abschluss von Schritt a) erhalten wird, vom Typ Magadiit ist.
b) Abtrennen, Waschen mit Wasser und Trocknen bei 50 bis 150 °C des kristallisierten Feststoffs,
c) Behandeln des kristallisierten Feststoffs mit einer Lösung, die ein Quellmittel enthält,
d) Behandeln des gequollenen Feststoffs, sodass es zu einer mindestens teilweisen Schichtauftrennung kommt,

15. Herstellungsverfahren nach Anspruch 14, wobei die schichtauftrennende Behandlung des Schrittes d) mit einem Mittel durchgeführt wird, das aus den folgenden Behandlungen ausgewählt ist, die allein oder in Kombination durchgeführt werden können: mechanische Behandlung und Ultraschallbehandlung.

16. Herstellungsverfahren nach einem der Ansprüche 14 oder 15, wobei auf die schichtauftrennende Behandlung des Schrittes d) eine Säurebehandlung folgt.

17. Herstellungsverfahren nach einem der Ansprüche 14 bis 16, wobei auf die schichtauftrennende Behandlung des Schrittes d) ein Trocknungsschritt e) bei einer Temperatur im Bereich von 80 bis 150 °C folgt.

18. Herstellungsverfahren nach Anspruch 17, wobei auf den Trocknungsschritt ein Brennschritt f) bei einer Temperatur im Bereich von 300 bis 800 °C folgt.

19. Verfahren zum Hydrocracken/hydrierenden Umwandeln, bei welchem der kristallisierte Feststoff nach einem der Ansprüche 1 bis 13 verwendet wird.

20. Verfahren zur hydrierenden Raffination, bei welchem der kristallisierte Feststoff nach einem der Ansprüche 1 bis 13 verwendet wird.
